# EUROPEAN PATENT APPLICATION

(11) **EP 1 642 748 A1**
(43) Date of publication of application: **05.04.2006**
(21) Application number: 04746981.2
(22) Date of filing: 29.06.2004
(51) Int. Cl.: B42D 15/10

(54) **STRUCTURE FOR IDENTIFYING OBJECT AND OBJECT PROVIDED WITH THAT STRUCTURE**

(30) Priority: 03.07.2003 JP 2003191366
(71) Applicant: Nippon Oil Corporation, Tokyo 105-8412 (JP)
(72) Inventor: NISHIMURA, Suzushi, c/o NIPPON OIL CORPORATION, Yokohama-shi, Kanagawa 2310815 (JP); SEKI, Takashi, c/o NIPPON OIL CORPORATION, Yokohama-shi, Kanagawa 2310815 (JP); IMAFUKU, Hiroshi, c/o NIPPON OIL CORPORATION, Yokohama-shi, Kanagawa 2310815 (JP)
(74) Representative: Grünecker, Kinkeldey, Stockmair & Schwanhäusser Anwaltssozietät
(86) International application number: PCT/JP2004/009512
(87) International publication number: WO 2005/002874

(57) **Abstract**

An object identification structure for generally distributed products is provided which is extremely hard to forge, high in identifiability, and can be manufactured inexpensively. The object identification structure comprises a single layer cholesteric liquid crystal film which is substantially colorless and transparent when viewed from the front and appears colored when viewed from a predetermined oblique direction.

## Description

### [Field of the Invention]

The present invention relates to identification structures for preventing forgery of various two-dimensional and three-dimensional objects or articles such as passports, cards, security notes, gift certificates, pictures, public transportation tickets, public betting tickets, and various commercial goods, and in particular to identification structures for verifying the authenticity of such objects by visually or mechanically recognizing an identification (security) medium attached thereto.

### [Background of the Invention]

It has been conventionally practiced to prevent the forgery of an object such as a card and a security note by visually identifying or recognizing a hologram attached to the object so as to verify the authenticity thereof. In order to eliminate the ambiguity of such visual verification, it has been proposed to irradiate a light beam with a certain wavelength on a hologram with certain diffraction properties such that the authenticity of the object with such a hologram may be verified by detecting the direction of the diffracted light.

It has also been proposed to utilize the unique characteristics of cholesteric liquid crystal such that a film formed thereof and optionally provided with hologram optic characteristics is applied on an object such as a credit card, a security note or a cash voucher for security purposes, and used as an authenticity identification medium so as to verify visually or mechanically the authenticity thereof (see, for example, the following patent documents 1 to 4).

| | |
|---|---|
| (Patent Document 1) | Japanese Patent Laid-Open Publication No. 63-51193 |
| (Patent Document 2) | Japanese Patent Laid-Open Publication No. 11-42875 |
| (Patent Document 3) | Japanese Patent Laid-Open Publication No. 11-151877 |
| (Patent Document 4) | Japanese Patent Laid-Open Publication No. 11-277957 |

However, due to the recent wide spread of hologram manufacturing technology, the manufacture of hologram becomes so easy that illicit duplicate (counterfeit) of hologram for visual verification which is hardly distinguishable from an authentic or real hologram can be manufactured without any significant difficulty. Therefore, hologram becomes less effective in preventing such illicit duplication. Other technologies for preventing forgery, are known but are so costly to prevail in commercial markets.

On the other hand, cholesteric liquid crystal films are suitable materials to be distributed in common commercial markets because of their easiness of handling but are still required for further improvements in a capability to prevent forgery as result of recent highly developed forgery techniques.

### [Disclosures of the Invention]

The present invention was made in order to solve the problems of the prior art techniques as described above and has an object to provide an identification structure suitable for commercially distributed goods which structure is difficult in forgery and has high distinguishability as well as an object provided with the identification structure, in an inexpensive manner.

According to the present invention, this object is achieved using a specific cholesteric liquid crystal film as an identification medium. More specifically, hologram, which varies in optical characteristics depending on the spacing of grooves formed on a surface plane thereof, can be relatively easily duplicated if a forger has a technique for fabricating such grooves. However, it is much more difficult to duplicate the liquid crystal film of the present invention because the optical characteristics thereof is determined by the three-dimensional spacing of the molecules, requiring complicated know how concerning material selection and fabrication techniques for manufacturing the film and the liquid crystal film has specific optical parameters. The inventors of the present invention focused on these characteristics of a cholesteric liquid crystal film and achieved the present invention based on the finding that the use of such characteristics for identification of cards, passports, security notes, and gift certificates was able to improve the distinguishability and anti-counterfeit properties thereof.

According to a first aspect of the present invention, there is provided an object identification structure for identifying the authenticity of an object by optically recognizing an identification medium attached thereto wherein the identification medium comprises a single layer cholesteric liquid crystal film which is substantially colorless and transparent when viewed from the front and appears colored when viewed from a predetermined oblique direction.

According to a second aspect of the present invention, there is provided an object identification structure for identifying the authenticity of an object by optically recognizing an identification medium attached thereto wherein the identification medium comprises a single layer cholesteric liquid crystal film which is substantially colorless and transparent when viewed from the front and appears colored, varying from colorless through red, orange, yellow, green, and blue to purple in the shortwave direction in sequence when the viewing angle is shifted obliquely from the front.

According to a third aspect of the present invention, there is provided the object identification structure wherein light reflected by or transmitted through the identification medium is recognized or detected through a wave plate and a polarizing filter or, a color filter.

According to a fourth aspect of the present invention, there is provided the object identification structure wherein the liquid crystal film is used as any of the filters used in the third aspect.

According to a fifth aspect of the present invention, there is provided the object identification structure wherein the identification medium comprises a plurality of regions obtained by arranging a plurality of cholesteric liquid crystal films with different characteristics from each other in accordance with the predetermined regularity and the authenticity of the object is identified by recognizing the arrangement pattern of the cholesteric liquid crystal films.

According to a sixth aspect of the present invention, there is provided the object identification structure wherein the identification medium comprises a region of cholesteric liquid crystal and a psued-region thereof arranged in accordance with the predetermined regularity and the authenticity of the object is identified by recognizing the arrangement pattern of these regions.

According to a seventh aspect of the present invention, there is provided an object provided with the identification structure as defined in any of the first to sixth aspects.

According to an eighth aspect of the present invention, there is provided a security structure utilizing the identification structure as defined in any of the first to sixth aspects.

The present invention will be described in more details below.

Cholesteric liquid crystals are normally of a layered structure wherein in each layer the molecules are oriented such that the longitudinal axes thereof (director) are parallel to each other and to the plane of each layer. Each layer is slightly twisted to the adjacent layer such that a three-dimensional spiral structure is produced. This structure exhibits characteristics to selectively reflect a circularly polarized light with a wave length of λ which is given by λ = n·p where p is the distance required for the director to rotate 360 degrees, i.e., "pitch" and n is the mean refractive index of each layer. Therefore, if the molecule direction of cholesteric liquid crystal in each layer turns counter-clockwise with respect to the incident light, the left-handed circularly polarized component of the incident light having the wavelength of λ is reflected while the right-handed circularly polarized component passes through. The light having any other wavelength passes through the cholesteric liquid crystal. For example, when a random light such as sunlight is illuminated on a cholesteric liquid crystal material with characteristics to reflect red light with the wavelength of λR, placed on any black background material absorbing light in the visible range, the transmitted light is completely absorbed, and only a left-handed circularly polarized light with the wavelength of λR is reflected such that the cholesteric liquid crystal material emits bright red light.

The cholesteric liquid crystal material has characteristics to change color depending on the viewing angle. When the incident angle to the plane of a cholesteric liquid crystal material is θ, the optical path difference between the top surface and bottom surface thereof will be defined as "2pcosθ". If this optical path difference is a multiple of the wavelength λ, i.e., (2p·cosθ= aλ where a is an integer), the components of light reflected from the top and bottom surfaces reinforce each other. Therefore, as the incident angle becomes shallower, a light component having a progressively shorter wavelength is amplified, and the reflected light turns from red to blue.

In general, a cholesteric liquid crystal with a low molecular weight is sensitive to temperature change, electric field and magnetic field and changes its color when affected by such influences. However, when a cholesteric liquid crystal film obtained by thermal- and/or photo-crosslinking a cholestericliquid crystal material or fixing a cholesteric liquid crystal material so as to be in a glassy state using temperature difference such that the cholesteric orientation after being aligned is not disordered, the resulting cholesteric liquid crystal film is highly stable and much less affected by such influences.

The cholesteric liquid crystal film used in the present invention is substantially colorless and transparent when viewed from the front and appears colored when viewed from a predetermined oblique direction. More specifically, the cholesteric liquid crystal film is substantially colorless and transparent when viewed from the front and appears colored, varying from colorless through red, orange, yellow, green, blue to purple in the short wavelength direction in sequence when the viewing angle is shifted obliquely from the front.

The method of forming the cholesteric liquid crystal film as described above varies depending on the type or composition ratio of a film material such as a polymeric liquid crystalline substance and a low molecular weight liquid crystalline substance but the cholesteric liquid crystal film may be generally obtained by heating such a liquid crystalline substance so as to form a cholesteric orientation and fixing the orientation by a method suitable for the selected substance.

Heating temperature for forming a cholesteric orientation is usually from 30 to 250°C, preferably from 40 to 240°C, and particularly preferably from 50 to 230°C. Heating time is usually from 5 seconds to 2 hours, preferably from 10 seconds to 1 hour, and particularly preferably 20 seconds to 30 minutes. The thickness of the cholesteric liquid crystal film is usually from 0.3 to 30 µm, preferably from 0.5 to 20 µm, and particularly preferably 0.7 to 10 µm.

In the case of using a film material containing a polymeric liquid crystalline component as the major component, the cholesteric orientation may be fixed by allowing the film material to exhibit a desired cholesteric liquid crystalline phase and cooling rapidly the film material as it is. Alternatively, in the case of using a film material containing a low molecular weight liquid crystalline component as the major component, the cholesteric orientation may be fixed by allowing the film material to exhibit a desired cholesteric liquid crystalline phase and then photo-, thermal- or electron beam-crosslinking the film material as it is.

Examples of the material of the cholesteric liquid crystal film include polymeric cholesteric liquid crystalline substances obtained by adding a predetermined amount of a optically active compound to a polymeric liquid crystalline compound which can exhibit a uniform mono domain nematic orientation on an alignment substrate and can be easily fixed in such an aligned state and those which can exhibit a uniform mono domain cholesteric orientation and can be easily fixed in such an aligned state.

Examples of the polymeric nematic liquid crystalline substance include main chain liquid polymeric crystalline compounds such as polyesters, polyimides, polyamides, polycarbonates, and polyesterimide and side chain polymeric liquid crystalline compounds such as polyacrylates, polymethacrylates, polymalonates, and polysiloxanes. Preferred are liquid crystalline polyesters because they are excellent in alignability and easily synthesized. Preferred examples of the constituting unit of these polymers include aromatic or aliphatic diol units, aromatic or aliphatic dicarboxylic acid units, and aromatic or aliphatic hydroxycarboxylic acid units.

Typical examples of the optically active component added to twist the orientation of the polymeric nematic liquid crystalline substance and form a cholesteric orientation therein include optically active low molecular weight compounds and compositions. Any optically active compound or composition may be used in the present invention as long as it has an optically active group in its molecules. However, optically active low molecular weight liquid crystalline compounds and compositions are preferable with the objective of compatibility with the above-described polymeric liquid crystalline compounds.

Alternative examples of the optically active component include optically active polymeric compounds and compositions. Any optically active compound or composition may be used in the present invention as long as it has an optically active group in its molecules. However, optically active polymeric liquid crystalline compounds and compositions are preferable with the objective of compatibility with the above-described polymeric liquid crystalline compounds. Examples of such optically active polymeric liquid crystalline compounds and compositions include polyacrylates, polymethacrylates, polymalonates, polysiloxanes, polyesters, polyamides, polyesteramides, polycarbonates, polypeptides, and cellulose and compositions containing any of these compounds as the main component. Preferred are optically active liquid crystalline polyesters mainly containing an aromatic component.

Examples of the polymeric liquid crystalline compound having an optically active group in its molecules include polymers having an optically active group in their main chain such as polyesters, polyimides, polyamides, polycarbonates, and polyesterimides and those having an optically active group in their side chain such as polyacrylates, polymethacrylates, polymalonates, and polysiloxanes. Preferred are liquid crystalline polyesters because they are excellent in alignability and are easily synthesized. Preferred examples of the constituting unit of these polymers include aromatic or aliphatic diol units, aromatic or aliphatic dicarboxylic acid units, and aromatic or aliphatic hydroxycarboxylic acid units.

In the case of using a film material containing a low molecular weight liquid crystalline component as the major component, it is preferable to use a low molecular weight liquid crystalline compound having a crosslinkable structure in its molecules. Examples of such a compound include those to which any of functional groups such as acryloyl, oxetanyl, and vinyl groups is introduced, more specifically those containing any of biphenyl, phenylbenzoate, and stilbene derivatives as the main chain. The liquid crystalline compound may be either lyotropic or thermotropic. Preferred are those exhibiting thermotropic properties with objective of workability and processability.

Other than the polymeric or low molecular weight liquid crystalline substance, a crosslinking agent such as bisazido compounds and glycidyl methylacrylate may be added to the film material to an extent that the film material is not prohibited from exhibiting a cholesteric phase, so as to improve the heat resistance of the resulting cholesteric liquid crystal film. Addition of such a crosslinking agent makes it possible to crosslink the film material while exhibiting a cholesteric liquid crystal phase. Furthermore, various additives such as a dichroic dye, a dye, a pigment, an antioxidant, an ultraviolet absorbing agent and a hard coat agent may be added in the film material to an extent that the advantageous effects of the present invention is not impaired.

A single layer cholesteric liquid crystal film is formed on an alignment substrate using the above-described film materials. Examples of the alignment substrate include glass sheets, plastic film substrates, plastic sheets and polarizing films. Examples of the glass sheets include sodalime glass, alkali glass, alkali-free glass, borosilicate glass, flint glass and quarts glass. Examples of the plastic film substrate include polymethyl methacrylate, polystyrene, polycarbonate, polyether sulfone, polyphenylene sulfide, amorphous polyolefin, triacetyl cellulose, polyethylene terephthalate, and polyethylene naphthalate.

An alignment film to be applied on a substrate is preferably a polyimide film having been subjected to a rubbing treatment but may also be any alignment film known to the relevant fields. In the present invention, any plastic film or sheet directly provided with alignability by a rubbing treatment without coating thereon such a polyimide film may be used as the alignment substrate. There is no particular restriction on the aligning treatment as long as the molecules in the cholesteric liquid crystal layer can be equally aligned parallel to the rubbed surface of each layer.

On a rubbed surface of or an alignment film on a substrate is formed a cholesteric liquid crystal film with an adequate pitch.

The liquid crystal material is developed on a rubbed surface of a substrate or an alignment film on a substrate by solution coating or melt coating. Solution coating is preferable for convenience of processing.

In solution coating, a solution with a predetermined concentration is prepared by dissolving the liquid crystal material in a solvent at a predetermined ratio. Although the type of solvent varies depending on the type of liquid crystalline material to be used, examples of the solvent include halogen-based solvents such as chloroform, dichloroethane, tetrachloroethane, trichloroethylene, tetrachloroethylene and orthodichlorobenzene; mixed solvents of phenols and these halogen-based solvents; ketones; ethers; polar solvents such as dimethylformamide, dimethylacetoamide, dimethyl sulfoxide, N-methylpyrrolidone, sulfolane, and cyclohexane. The concentration of the solvent varies depending on the type of liquid crystalline material to be used but is usually from 5 to 50 percent by weight, preferably from 7 to 30 percent by weight. The solution is coated on the alignment film on or rubbed surface of the substrate.

The solution may be coated by any of spin coating, roll coating, die coating, and curtain coating.

After coating, the solvent is dried out, and the substrate with the film material is heated at a predetermined temperature for a predetermined period of time thereby completing the formation of a cholesteric orientation therein. The resulting cholesteric orientation is fixed by cooling to a temperature equal to or lower than the glass transition temperature. Alternatively, the cholesteric orientation may be fixed by photo-, thermal-, or electron beam-crosslinking.

Various optical parameters of the cholesteric liquid crystal film layer used in the present invention such as wavelength band width of selective reflection, film thickness, and the number of twist turn may vary depending on, for example, for what purpose the resulting liquid crystal film is to be used. However, the wavelength band width of selective reflection is usually from 30 to 500 nm while the center wavelength of the cholesteric selective reflection is usually from 700 to 2000 nm, preferably from 750 to 1100 nm which is in the near-infrared region. The actual thickness of the liquid crystal layer is preferably from 0.6 to 6 µm. The term "wavelength band width of selective reflection" used herein denotes a wavelength range in which the reflectance by selective reflection is 70% or more upon incidence of a circularly polarized light in the same direction as the twist direction of the liquid crystal molecules which form the cholesteric orientation. If the center wavelength departs from the aforesaid range, the advantageous effects of the present invention may not be achieved because the resulting film appears colored and is not transparent when viewed from the front and is not colored when viewed obliquely. If the actual thickness of the liquid crystal layer is less than 0.6 µm, the selective reflection effect due to the cholesteric orientation may be reduced. Furthermore, the number of twist turns in the cholesteric liquid crystal film layer is usually in the range of 2 to 20 turns. If the number of twist turns is smaller than 2 turns, the sufficient selective reflection effect due to the cholesteric orientation may not be obtained.

On the liquid crystal surface of the resulting cholesteric liquid crystal film may be formed an overcoat layer for protecting the surface. There is no restriction on the overcoat layer. For example, the overcoat layer may be a product obtained by coating and curing an adhesive exhibiting optically isotropic properties after being cured. In the case of using such an adhesive as the overcoat layer, a releasable substrate may be bonded via the adhesive on the liquid crystal surface of the cholesteric liquid crystal film and released after the adhesive is cured thereby forming the overcoat layer. There is no particular restriction on the releasable substrate as long as it is a substrate which has releasability and self-supporting properties. For example, the releasable substrate may be a plastic film with releasability. The term "releasability" used herein denotes that the releasable substrate can be released at the interface with the adhesive in a bonded state of the cholesteric liquid crystal film and the substrate via the adhesive.

There is no particular restriction on the adhesive as long as it can bond the cholesteric liquid crystal film and the releasable substrate and release the latter therefrom. The adhesive can be classified, according to curing means, into photo-curing type, electron beam-curing type, and thermo-curing type for example. Particularly, more preferred are photo-curing type and electron beam-curing type adhesives containing an acrylic oligomer as the major component and epoxy resin-based photo-curing type and electron beam-curing type adhesives.

There is no particular restriction on the form of bonding between the cholesteric liquid crystal film and the releasable substrate. However, generally an adhesive layer is disposed between the film and the substrate. There is no particular restriction on the thickness of the adhesive layer, but it is usually in the range of 1 to 30 µm. Additives such as an antioxidant, an ultraviolet absorbing agent, and a hard coating agent may be added to the adhesive to an extent that they do not impair the advantageous effects of the present invention.

After forming an overcoat layer or bonding a releasable substrate, the alignment substrate is released from the cholesteric liquid crystal film and an adhesive is coated on the liquid crystal film surface to which the alignment substrate has been attached thereby obtaining a desired identification medium to be transferred to an object.

There is no particular restriction the method of attaching the identification medium to an object. Therefore, the identification medium may be attached by hot stamp, heat seal, or a manual roll seal application which may be selected depending on the form of the identification medium.

The identification medium of the present invention is a single layer cholesteric liquid crystal film which is substantially colorless and transparent when viewed from the front and appears colored when viewed from a predetermined oblique direction or a cholesteric liquid crystal film which is substantially colorless and transparent when viewed from the front and appears colored, varying from colorless through red, orange, yellow, green, blue to purple in the short wavelength direction in sequence when the viewing angle is shifted obliquely from the front. Therefore, it is not possible to recognize whether the identification medium of the present invention is attached to an object quickly Furthermore, since the identification medium appears colored when viewed obliquely, the authenticity of an object with the identification medium attached thereto can be easily verified without using a particular detection means. It is also possible to verify the authenticity of such an object by recognizing or detecting the light reflected by or transmitted through the identification medium, via a wave plate and a polarizing filter containing a similar cholesteric liquid crystal film or a circular polarizer, or via a color filter. Even when the identification medium is coated over a photography or a printed matter, the design or appearance thereof is not spoiled or disfigured because the identification medium is substantially colorless and transparent when viewed from the front. The identification medium is excellent in fanciness because it appears colored when viewed obliquely and thus provides an object with a different design or appearance.

### [Applicability in the Industry]

As apparent from the above description, the identification medium of the present invention attached to an object is a single layer cholesteric liquid crystal film which is substantially colorless and transparent when viewed from the front and appears colored when viewed from a predetermined oblique direction or a cholesteric liquid crystal film which is substantially colorless and transparent when viewed from the front and appears colored, varying from colorless through red, orange, yellow, green, blue to purple in the short wavelength direction in sequence when the viewing angle is shifted obliquely from the front. Therefore, even when the cholesteric liquid crystal film is applied to any surface portion of the object on which a photography or illustration is printed or a design with letters or devices is provided, the film does not spoil or disfigure the printing or design of the object when viewed from the front. Furthermore, the cholesteric liquid crystal film makes it possible to verify easily and reliably the authenticity of an object to which the film is attached due to its high indetifiability and stability as well as its necessity of well-advanced manufacturing technology and improve the anti-counterfeit effect. The identification medium of the present invention has a significantly high level of industrial value.

### [Best Mode for Carrying out the Invention]

The present invention will be described in more details with reference to the following examples but is not limited thereto.

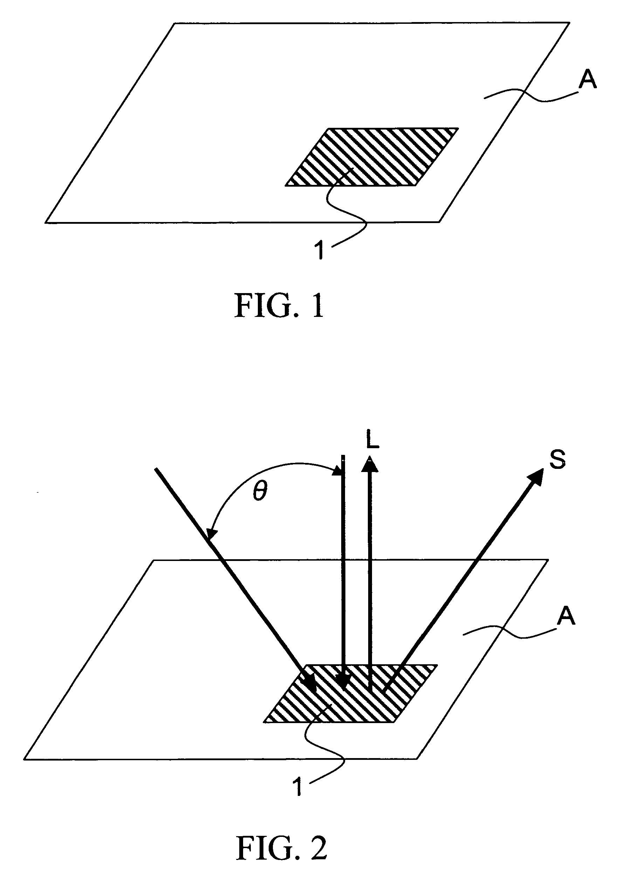

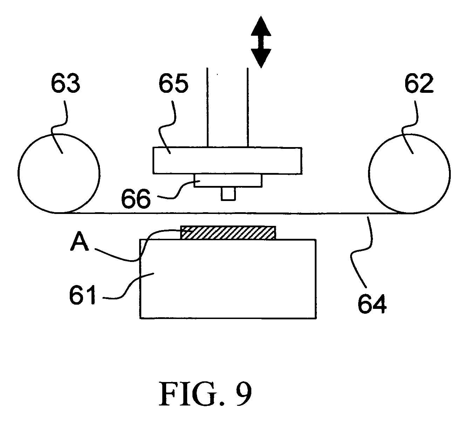

As shown in Fig. 1, one or more foils 1 wherein a polymeric cholesteric liquid crystal with a predetermined pitch is formed are attached to a suitable surface portion or the whole surface of an object A in the form of a card, a passport, a security note or a gift certificate by means of hot stamp. The term "hot stamp" used herein denotes a method wherein a decorative foil is transferred to a surface of an object with an instantaneous application of heat and pressure using an apparatus as shown in Fig. 9. More specifically, the object A is placed on a holder 61, and a hot stamping foil 64 supplied from a feed roll 62 and wound on a winding roll 63 is pressed against the object with a male metallic die 66 which is actuated by an actuator such as a cylinder not shown in the drawing and heated by a heating plate 65. The hot stamping foil 64 is usually of a multi-layered structure of a base film layer, a releasable layer, a protection layer, a metallic film layer and a bonding layer laminated in this order. When the hot stamping foil is pressed, the resulting pressure and heat separates the protection layer, metallic film layer having a cholesteric liquid crystal film layer formed thereon, and bonding layer from the base film and transfer them on the object thereby forming the foil 1.

The resulting foil 1, i.e., a single layer cholesteric liquid crystal film transferred to the object A can be visually or mechanically read and recognized.

The method for attaching the foil 1 as the identification medium to the object A may be a heat seal method or a manual roll seal application.

### (Example 1)

Referring to Fig. 2, a foil formed from a single layer cholesteric liquid crystal film according to the present invention serving as an identification medium is transferred or attached to a suitable location on a surface of an object A.

When a random light is irradiated to the assembly, a light with a certain color corresponding to the characteristics of the liquid crystal is reflected therefrom. The authenticity of the object can be verified by visually or mechanically detecting the reflected light. Because a similar effect may be obtained even by applying or printing a normal ink, it is preferable to increase gradually the incident angle θ of the light with respect to the normal axis to the liquid crystal surface and verifying through the change in color. As described above, the wavelengths of the reflected lights which reinforce or amplify each other continuously change to the short wavelength side, and thus the reflected light changes in color thereby improving the reliability of the verification of the authenticity of the object. Obviously, an object coated with an ink does not exhibit any change in color (wavelength) of the reflected light with the change of the incident angle.

### (Example 2)

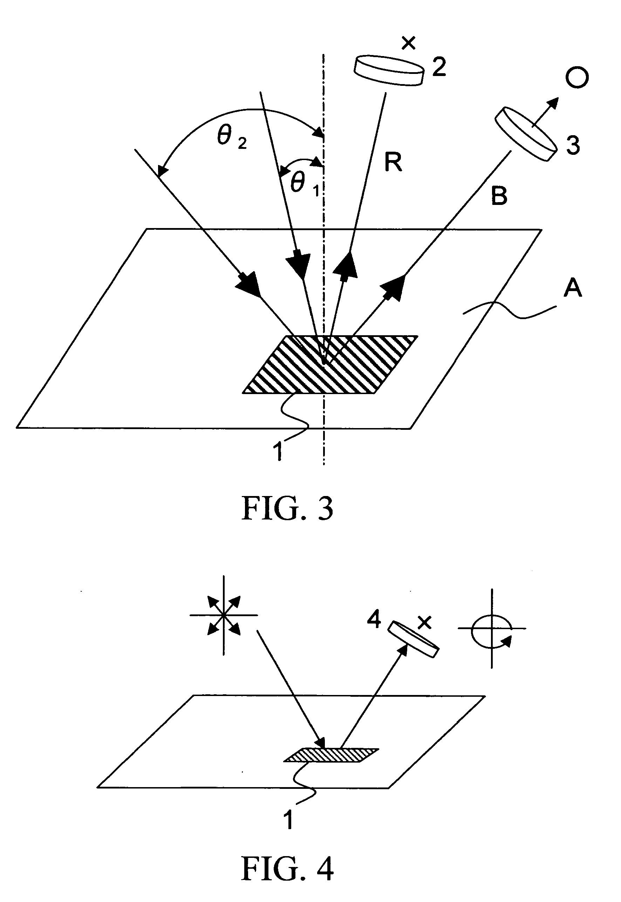

Referring to Fig. 3, in this example, a foil 1 formed from a cholesteric liquid crystal film serving as an identification medium is transferred or attached to a suitable location on a surface of an object A. Furthermore, a filter 2 shutting off the light of the reflection wavelength of the liquid crystal is placed in the path of the reflected light of a light made incident at an angle of θ₁ with respect to the normal axis to the foil 1, and a similar filter 3 is placed in the path of the reflected light of a light made incident at an angle of θ₂ with respect to the normal axis to the foil 1.

When a random light is made incident at the angle of θ₁ onto the foil 1 and the liquid crystal has the characteristics to reflect red light, the reflected light does not pass through the filter 2 thereby producing a dark view therethrough and thus the reflected light is not recognizable. When a random light is made incident at the angle of θ₂, the wavelengths reinforcing or amplifying each other are getting shorter (bluish color), and thus the reflected light is allowed to pass trough the filter 3 and becomes recognizable. This reflected light may be visually recognized or detected using a light detecting device for detecting the intensities of the reflected light placed at locations in the corresponding directions of the reflected light, for the verification of the authenticity.

### (Example 3)

Referring to Fig. 4, in this example, a foil 1 formed from a cholesteric liquid crystal film serving as an identification medium is transferred or attached to a suitable location on a surface of an object A. A liquid crystal filter 4 containing a cholesteric liquid crystal film having the characteristics to reflect only a circularly polarized light component whose polarizing direction (right or left) and wavelength are the same as those of the light reflected by the foil 1 is located in a path of light reflected by the foil 1.

When a random light is irradiated on the foil 1, the reflected light does not pass through the filter 4 thereby producing a dark view therethrough and thus the reflected light is not recognizable. However, when the object is viewed without through the filter 4, a reflected light of a predetermined color can be recognized. The authenticity of the object may be verified by visually recognizing this difference. Alternatively, the authenticity may be verified by placing a light detecting device so as to detect the difference in the intensities of the reflected lights.

### (Example 4)

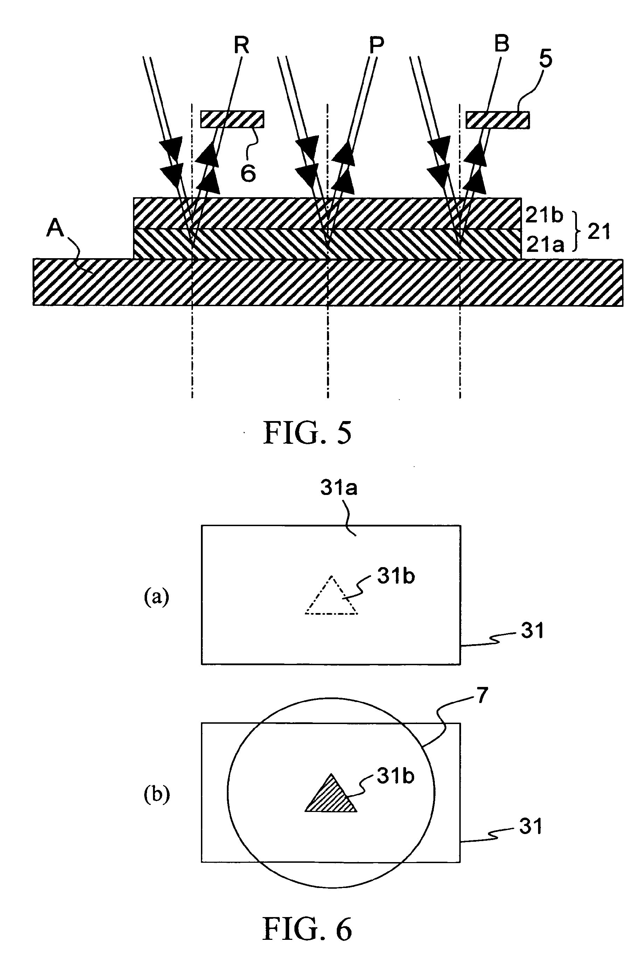

Referring to Fig. 5, in this example, a foil 21 formed from cholesteric liquid crystal films 21a, 21b of two different types applied thereon one over the other, serving as an identification medium is transferred or attached to a suitable location on a surface of an object A.

Upon identification, liquid crystal filters 5, 6 having the same characteristics as those of the cholesteric liquid crystal films 21a, 21b, respectively, are placed in paths of light reflected by the foil 21.

For instance, the liquid crystal film 21a and the liquid crystal filter 5 reflect red light while the liquid crystal film 21b and the liquid crystal filter 6 reflect blue light. When a random light is made incident onto the foil 21, the light reflected thereby is purple in color. The reflected light exhibits blue color when passes through the liquid crystal filter 5 and exhibits red color when passes through the liquid crystal filter 6. Therefore, the authenticity of the object may be verified by visually recognizing this difference. Alternatively, the authenticity may also be verified by detecting and comparing the two wavelengths.

### (Example 5)

Referring to Fig. 6 (a), in this example, a foil 31 formed from cholesteric liquid crystal films 31a, 31b of two different types arranged in a non-overlapping relation so as to define graphics, letters, or patterns, serving as the identification medium is transferred or attached to a suitable location or the whole surface of an object A. These liquid crystal films reflect light of an identical wavelength but reflect different circularly polarized lights. That is, the liquid crystal film 31a reflects a right-handed circularly polarized component, while the liquid crystal film 31b reflects a left-handed circularly polarized component.

Upon identification, a liquid crystal filter 7 having the same characteristics as those of either one of the cholesteric liquid crystal films 31a, 31b is placed in a path of light reflected by the foil 31 (Fig. 6(b)).

When a random light is made incident onto the foil 31, the reflected light therefrom exhibits a color corresponding to the reflected wavelength of either one of the liquid crystal films 31a, 31b. However, the two liquid crystal films 31a, 31b can not be distinguished, and thus the graphics, letters, or patterns are not recognized. When the reflected light is viewed through the liquid crystal filter 7, the reflected light from either one of the liquid crystal films 31a, 31b is shut off and the graphics, letters, or patterns becomes recognizable. This can be visually recognized for verifying the authenticity of the object A.

### (Example 6)

A foil 41 (cholesteric liquid crystal film) reflecting infrared light serving as an identification medium is transferred or attached to a suitable location on a surface of an object A. Therefore, when the foil is visually observed, it appears transparent as it does not reflect any visible light.

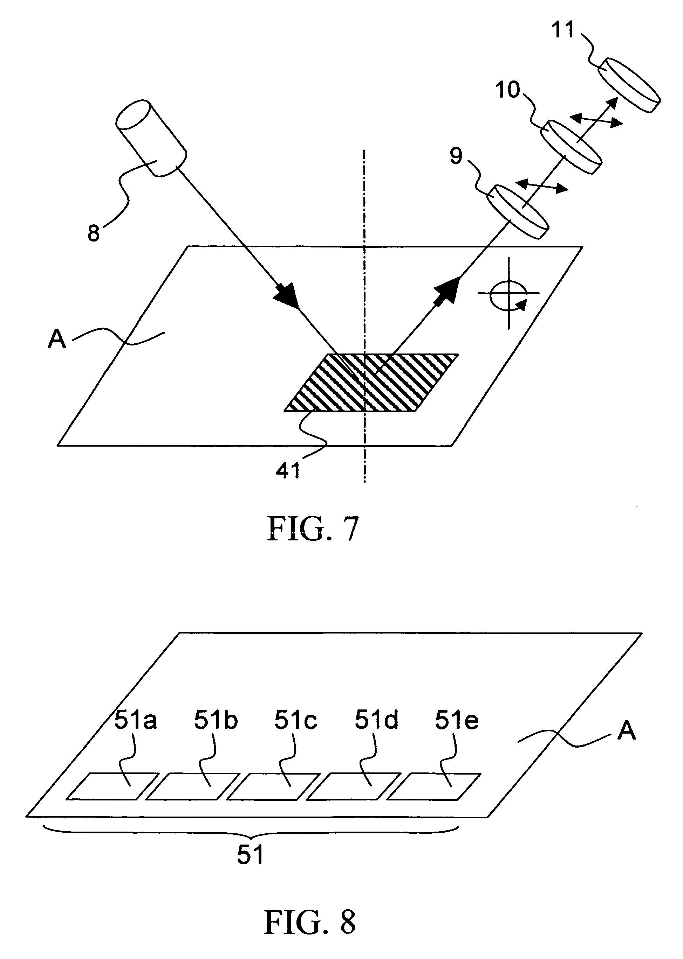

Referring to Fig. 7, upon identification, an infrared laser beam is irradiated from an infrared laser emitting device 8 to the foil 41. Furthermore, in a path of reflected light are arranged a λ/4 plate 9, a polarizing filter 10, and a light receiving device 11 in this order.

Upon identification, an infrared laser beam from the infrared laser emitting device 8 is irradiated to the foil 41, and the reflected light converted to a linearly polarized light by the λ/4 plate 9. Thereafter, the light transmitted through the λ/4 plate is received by the light receiving device 11 via the polarizing filter 10 placed in aligned with the optical axis thereof. The authenticity of the object A can be verified from the intensity of the received light.

### (Example 7)

In this example, foils 51a, 51c each formed from a cholesteric liquid crystal film reflecting infrared light and transparent PET films 51b, 51d, 51e are arranged on an object A in accordance with a predetermined regularity to form jointly an identification medium.

Upon identification, the foil 51a, PET film 51b, foil 51c, and PET films 51d and 51e are sequentially scanned, and the reflected light is allowed to pass through a λ/4 plate and a polarizing filter and then received by a light receiving device in a similar manner to Example 6. As a result, only the light reflected by the foils 51a, 51c has a high intensity. Therefore, binary data in the form of "10100" be obtained where the value "1" is given when a high intensity exceeding a predetermined value is detected and the value "0" is given in other cases. By comparing this data with reference data which is stored in advance, the authenticity of the object A can be verified. The number of possible variations of this data is represented by 2n-1 where n is the number of foils or films.

Alternatively, the PET films may be replaced with foils each formed from a cholesteric liquid crystal film having different characteristics from those of the foils 51a, 51c such that binary data may be read out from the difference in the characteristics of these liquid crystal films.

### (Example 8)

In this example, a foil 1 formed from a cholesteric liquid crystal film whose center wavelength is 800 nm, serving as an identification medium is transferred or attached to a suitable location on a surface of an object A.

When this identification medium is viewed from the front, the reflected light can not be visually recognized because it is not a visible light. However, when the identification medium is viewed at an oblique angle of about 30 degrees with respect to the normal axis thereof, the foil appears red thereby confirming the advantageous effects of the present invention.

### (Example 9)

In this example, a foil 1 formed from a cholesteric liquid crystal film whose center wavelength is 800 nm, serving as an identification medium is transferred or attached to a suitable location on a surface of an object A.

When this identification medium is viewed from the front, the reflected light can not be visually recognized because it is an invisible light in the near infrared region. However, when the identification medium is viewed at an oblique angle of about 30 degrees, about 40 degrees and then about 50 degrees, respectively with respect to the normal axis thereof, the foil turns to red, yellow, and then green in sequence. As the color of the foil changed in the short wavelength direction as the viewing angle is increased it was confirmed that the advantageous effects of the present invention are achieved.

### [Brief Description of the Drawings]

Fig. 1 is a perspective view showing the structure of an object provided with an identification structure according to the present invention.
Fig. 2 is a perspective view showing the structure of an embodiment of Example 1.
Fig. 3 is a perspective view showing the structure of an embodiment of Example 2.
Fig. 4 is a perspective view showing the structure of an embodiment of Example 3.
Fig. 5 is a perspective view showing the structure of an embodiment of Example 4.
Fig. 6 is a perspective view showing the structure of an embodiment of Example 5.
Fig. 7 is a perspective view showing the structure of an embodiment of Example 6.
Fig. 8 is a perspective view showing the structure of an embodiment of Example 7.
Fig. 9 is a schematic side view of a hot stumping apparatus.

### (Description of Numerals)

- A: object
- L: long wavelength light
- S: short wavelength light
- B: blue color
- P: purple color
- R: red color
- 1: foil
- 2,3: filters
- 4 to 7: liquid crystal filters
- 8: infrared laser emitting device
- 9: λ/4 plate
- 10: polarizing filter
- 11: light receiving device
- 21: foil (cholesteric liquid crystal film)
- 21a, 21b: cholesteric liquid crystal film
- 31: foil (cholesteric liquid crystal film)
- 31a, 31b: cholesteric liquid crystal film
- 41, 51: foils
- 51a, 51c: foils (cholesteric liquid crystal film)
- 51b, 51d,: 51e PET films
- 61: holder
- 62: feed roll
- 63: winding roll
- 64: hot stumping foil
- 65: heating plate
- 66: male metallic mold

## Claims

1. An object identification structure for identifying the authenticity of an object by optically recognizing an identification medium attached thereto wherein the identification medium comprises a single layer cholesteric liquid crystal film which is substantially colorless and transparent when viewed from the front and appears colored when viewed from a predetermined oblique direction.

2. An object identification structure for identifying the authenticity of an object by optically recognizing an identification medium attached thereto wherein the identification medium comprises a single layer cholesteric liquid crystal film which is substantially colorless and transparent when viewed from the front and appears colored, varying from colorless through red, orange, yellow, green, and blue to purple in the shortwave direction in sequence when the viewing angle is shifted obliquely from the front.

3. The object identification structure according to claim 1 or 2 wherein light reflected by or transmitted through said identification medium is recognized or detected through a wave plate and a polarizing filter or, a color filter.

4. The object identification structure according to claim 1 or 2 wherein said liquid crystal film is used as said filters.

5. The object identification structure according to any one of claims 1 to 4 wherein said identification medium comprises a plurality of regions obtained by arranging a plurality of cholesteric liquid crystal films with different characteristics from each other in accordance with the predetermined regularity and the authenticity of the object is identified by recognizing the arrangement pattern of the cholesteric liquid crystal films.

6. The object identification structure according to any one of claims 1 to 5 wherein said identification medium comprises a region of cholesteric liquid crystal and a pseudo-region arranged in accordance with the predetermined regularity and the authenticity of the object is identified by recognizing the arrangement pattern of these regions.

7. An object provided with the identification structure as defined in any one of claims 1 to 6.

8. A security system utilizing the identification structure as defined in any one of claims 1 to 6.
